# EUROPÄISCHE PATENTSCHRIFT

(11) **EP 0 519 274 B1**
(45) Veröffentlichungstag und Bekanntmachung des Hinweises auf die Patenterteilung: **19.04.1995**
(21) Anmeldenummer: 92109441.3
(22) Anmeldetag: 04.06.1992
(51) Int. Cl.: G01N 21/74

(54) **Graphitrohrofen**
Graphite tube furnace
Four à tube de graphite

(30) Priorität: 18.06.1991 DE 4120028
(43) Veröffentlichungstag der Anmeldung: 23.12.1992
(73) Patentinhaber: Fritz Ziegler Feinwerktechnik GmbH, D-88697 Bermatingen (DE)
(72) Erfinder: Ziegler, Fritz, W-7750 Bermatingen (DE)
(74) Vertreter: Patentanwälte Eisele, Otten & Roth

(56) Entgegenhaltungen:
- EP-A- 0 321 879
- EP-A- 0 326 642
- EP-A- 0 381 948
- DE-A- 2 554 950
- DE-A- 3 734 001
- DE-U- 8 713 503
- US-A- 5 118 187

## Beschreibung

Die Erfindung betrifft einen Graphitrohrofen zur elektrothermischen Atomisierung von Proben für die Atomabsorptions-Spektroskopie nach dem Oberbegriff des Anspruchs 1.

### Stand der Technik:

Die bekannte Analyse von Stoffen mittels der Atomabsorptions-Spektroskopie beruht auf der Erkenntnis, daß jedes Atom Licht derjenigen Wellenlinie absorbieren kann, bei der es auch selbst Strahlung emittiert. Demzufolge muß die in flüssiger oder fester Form vorliegende zu analysierende Probe atomisiert werden, um die Atome aus einem Molekülverband herauszuführen. Mittels einer Hohlkathodenlampe o. dgl. werden Spektrallinien ausgesandt, die die Atomwolke der Probe durchstrahlen. Durch Absorption bestimmter Spektrallinien durch bestimmte Atome wird die Intensität der Spektrallinien geschwächt. Eine spektrale Zerlegung des Lichtes im Monochromator sondert die Resonanzlinien aus und bringt deren Schwächung durch die Absorption zur Anzeige. Das Maß der Schwächung ist ein Maß für den Umfang der Absorption und damit ein Maß für das Vorhandensein der Menge oder der Konzentration des gesuchten Elements in einer Probe.

Zur Atomisierung der Probe ist die sogenannte Graphitrohrtechnik bekannt geworden, bei welcher ein Graphitrohrofen längs oder quer von einem hohen Strom durchflossen und damit auf hohe Temperatur, z. B. bis zu 3000° C, aufgeheizt wird. Der hohle Graphitzylinder wird dabei von dem Lichtbündel der Hohlkathodenlampe durchstrahlt. Es werden beispielsweise 5 bis 100 Mikroliter Substanz durch ein kleines Loch auf eine Probenplattform in das Graphitrohr eingebracht und aufgeheizt. Das Graphitrohr wird dabei von einem z. B. Argongasstrom umspült, um den Luftsauerstoff fernzuhalten und eine Verbrennung des Graphits zu vermeiden.

Weitere technische Einzelheiten mit weiteren Literaturnachweisen sind in der EP 0 381 948 A1, Spalte 1 bis 4, angegeben. Auf diesen Stand der Technik wird zur Erläuterung der vorliegenden Erfindung ausdrücklich Bezug genommen.

In der angegebenen Literaturstelle wird darauf verwiesen, daß die zu analysierende Probe im allgemeinen auf eine sogenannte L′vov Plattform aufgegeben wird. Diese Plattform - nachfolgend auch Probenaufnahme oder Probenlager genannt - ist entweder ein separates Werkstück (siehe z. B. DE-U1 87 13 503) oder ein bei der Graphitrohrofen-Fertigung mit in das Rohr integriertes Auflageelement.

Die Behandlung der auf die innere Probenaufnahme einpipettierten Probe erfolgt in einem ersten Trocknungsschritt zur Aufkonzentrierung und in einem nachfolgenden Pyrolyseschritt zur Atomisierung der Probe. Dabei wird der Graphitrohrofen in wenig mehr als einer Sekunde von Raumtemperatur auf über 2000° C aufgeheizt, was durch sehr hohe Ströme innerhalb des Graphitrohrofens erfolgt. Diese hohen Temperaturen werden etwa 10 s lang konstant gehalten, um die erforderlichen Schritte zu erreichen. Danach wird der Graphitrohrofen wieder auf Raumtemperatur abgekühlt.

Zur richtigen Behandlung der Probe innerhalb dieser Zeitspannen ist in der genannten Veröffentlichung EP 0 381 948 bereits ausgeführt, daß es erforderlich ist, eine gezielte Aufheizung des Graphitrohrofens vorzunehmen und eine vorzeitige Atomisierung der Probe zu vermeiden. Innerhalb des Aufheizvorganges soll deshalb der Trocknungsprozeß und der nachfolgende Atomisierungsvorgang zeitlich sehr präzise ablaufen, damit sich insbesondere für den Atomisierungsvorgang ein starkes Absorptionssignal ergibt. Hierfür wurde gemäß der genannten Veröffentlichung vorgeschlagen, daß die halbzylinderschalenförmige Probenaufnahme als Innenkörper nur an einem Ende mit dem Außenrohr verbunden ist, so daß diese zum einen nicht stromdurchflossen ist und dadurch nicht zusätzlich erwärmt wird. Zum anderen soll eine Wärmeleitung vom stromdurchflossenen rohrförmigen Ofenkörper zur Probenaufnahme über den Verbindungssteg weitgehend vermieden werden. Die Aufheizung der Probe soll möglichst ausschließlich durch Strahlungsenergie über den rohrförmigen Ofenkörper erfolgen.

Da sich der rohrförmige Ofenkörper unmittelbar durch den hohen Stromdurchgang stark erwärmt, stellt sich auch eine starke Strahlung ein, die unmittelbar auf die auf der offenen Probenaufnahme liegende Probe einwirkt. Dabei ist die auf die Probe abgegebene Strahlungsenergie oder Strahlungsleistung proportional zur 4. Potenz der Strahlungstemperatur, d. h. die Strahlungsleistung wirkt sich unmittelbar und nachhaltig auf die zu analysierende Probe aus. Die unmittelbar auf die Probe einwirkende Strahlung verhindert damit eine wirksame Verzögerung der Atomisierung der Probe. Zwar ist aus der DE 25 54 950 C2 ein Graphitrohr zum Atomisieren von Proben bekannt geworden, bei welchem der Innenkörper zur Aufnahme der Probe als Zylinderrohr ausgebildet ist. Dieses Innenrohr ist jedoch über mehrere, längsverlaufende Rippen mit dem ebenfalls rohrförmigen Außenkörper verbunden, so daß dieser zylinderschalenförmige Innenkörper ebenfalls stromdurchflossen einer starken Aufheizung unterliegt, die sich unmittelbar auf die Probe durch Abgabe von Strahlungsenergie auswirkt.

### Vorteile der Erfindung:

Der erfindungsgemäße Graphitrohrofen hat gegenüber den bekannten vergleichbaren Einrichtungen den Vorteil, daß eine weitere Verbesserung der Behandlung der zu analysierenden Proben erzielt wird. Insbesondere bezieht sich die verbesserte Behandlung auf eine noch gezieltere zeitliche Abstimmung des Trocknungsabschnitts zur Aufkonzentrierung der Probe und der nachfolgenden Atomisierung der Probe zur Durchführung der Atomabsorptions-Spektroskopie. Dabei geht die Erfindung von der Erkenntnis aus, daß eine unmittelbare Bestrahlung der Probe durch den stromdurchflossenen Graphitrohrofen dadurch vermieden wird, indem die Probe innerhalb eines zylinderförmigen Innenrohres als Probenaufnahme angeordnet ist, welches selbst nicht stromdurchflossen ist und sich daher nur aufgrund der Strahlung des äußeren rohrförmigen Außenkörpers aufheizt. Dabei wird der Verbindungsanschluß zwischen Innenrohr und Außenrohr derart angeordnet, daß er möglichst weit weg von der Probe angeordnet ist, so daß auch die Wärmeleitung zwischen Außenrohr und Innenrohr und damit zur Probe eine nur untergeordnete Rolle spielt. Gegenüber der bekannten halbzylinderschalenförmigen Ausbildung der inneren Probenaufnahme für die Probe hat ein geschlossenes Innenrohr den Vorteil, daß sich der Innenkörper aufgrund seiner höheren Masse später aber nicht insgesamt langsamer, d. h. verzögert aufheizt und einen unmittelbaren Strahlungseinfluß des Außenrohres auf die Probe abschirmt. Weiterhin bewirkt der rohrförmige geschlossene Innenkörper einen Einschluß der atomisierten Substanz und damit eine höhere Konzentration der Atomwolkendichte. Dies ergibt ein stärkeres Meßsignal. Schließlich kann bei einem rohrförmigen Innenkörper der Verbindungssteg zum Ofenkörper an eine zur Probe entfernt liegende Stelle angeordnet werden, wobei die "kälteste" Stelle des Ofenkörpers berücksichtigt wird. Ein zusätzlicher Rand verhindert ein Überlaufen der Substanz zum Außenrohr, was zu einem "Vorpeek" durch eine vorzeitige Atomisierung führen kann.

Die geschlossene Form der rohrförmigen Probenaufnahme ist gegenüber der offenen Schalenform auch stabiler, so daß sie noch dünnwandiger ausgeführt werden kann. Auch der konstante Spalt zwischen Innenrohr und Außenrohr ist bei der Rohrform des Innenrohrs exakter einhaltbar. Hierdurch ergibt sich eine exakt definierte Erwärmung des Innenrohrs durch die Strahlung des Ofenkörpers, wobei keine unmittelbare Strahlung auf die Probe einwirkt, sondern nur die mittelbare Strahlung des Innenrohrs auf die Probe.

Die in den Unteransprüchen aufgeführten Maßnahmen stellen weitere vorteilhafte Ausbildungen und Verbesserungen des im Anspruch 1 angegebenen Graphitrohrofens dar.

Weitere Einzelheiten der Erfindung sind in der Zeichnung dargestellt und anhand der nachfolgenden Beschreibung näher erläutert. Es zeigen
- Fig. 1: einen querbeheizten Graphitrohrofen in einem Längsschnitt mit zylinderrohrförmiger Innenprobenaufnahme und quer zur Spektrallinienachse liegender Stromzuführung,
- Fig. 2: eine Seitenansicht des Ofens im Teilschnitt entlang der Schnittlinie II-II in Fig. 1,
- Fig. 3: einen Teilschnitt der Darstellung nach Fig. 1 entlang der Schnittlinie III-III,
- Fig. 4: eine alternative Ausführung eines Graphitrohrofens mit Stromzuführung in Längsrichtung des Geräts und
- Fig. 5: eine Stirnansicht der Darstellung nach Fig. 4.

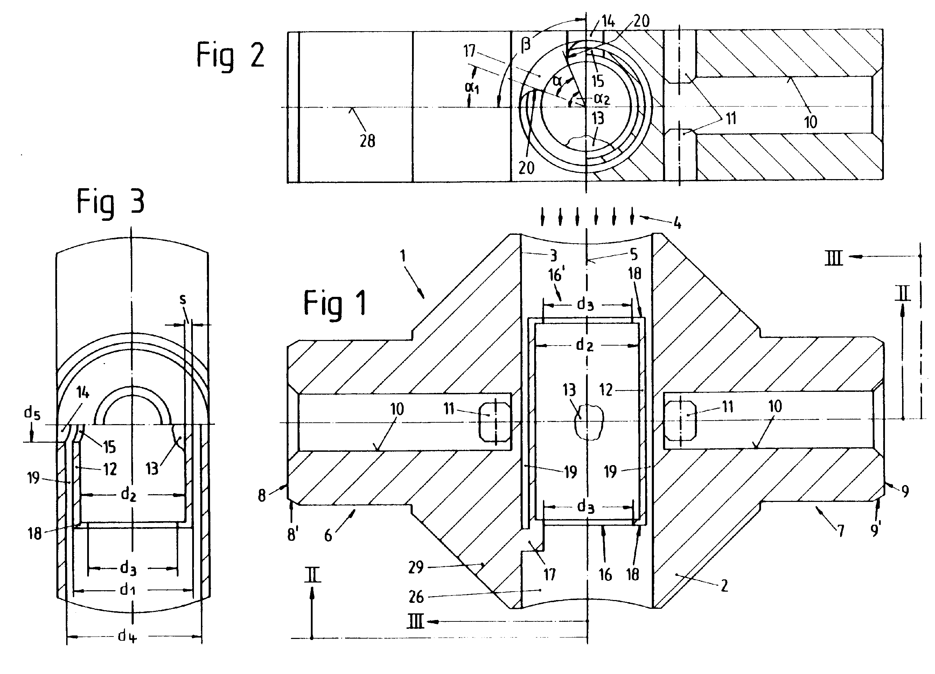

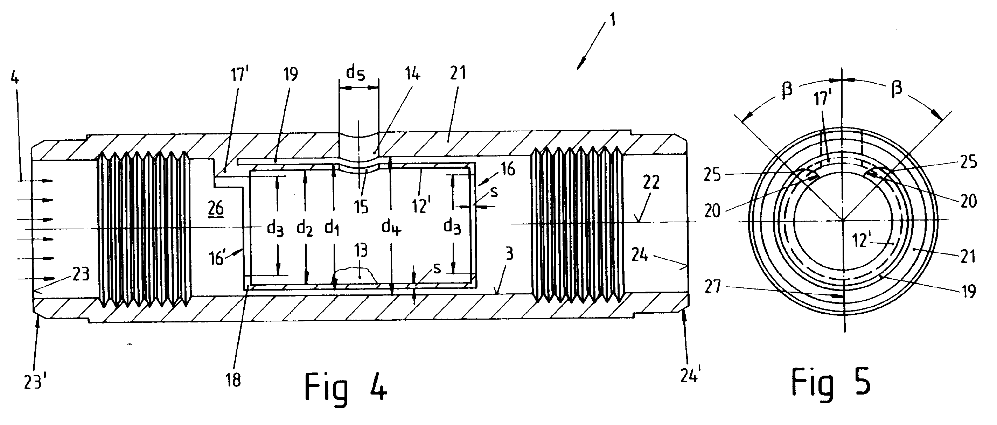

Der in den Figuren 1 bis 3 in verschiedenen Ansichten und Schnitten dargestellte, querbeheizte Graphitrohrofen 1 entspricht in seinem grundsätzlichen Aufbau dem in den Figuren 1 und 5 der EP 0 381 948 dargestellten Graphitrohrofen mit einem achteckigen Grundquerschnitt. Auf die diesbezügliche Beschreibung dieses bekannten Ofens wird hiermit ausdrücklich Bezug genommen.

Wie in Fig. 1 dargestellt, besteht der querbeheizte Graphitrohrofen 1 aus einem Ofenkörper 2 mit einer Innenbohrung 3, die von einem Meßlichtbündel 4 eines nicht näher dargestellten Atomabsorptions-Spektrometers durchsetzt ist. Zur Aufheizung des Ofenkörpers 2 sind senkrecht zur Längsachse 5 an dem achteckigen Grundquerschnitt des Ofenkörpers 2 zwei kreiszylindrische Kontaktansätze 6, 7 angeformt, deren außen liegende Stirnflächen 8, 9 umlaufende Kontaktfasen 8′, 9′ aufweisen, die als Anschlußflächen für einen Stromdurchgang durch den Graphitrohrofen dienen. Die Kontaktansätze 6, 7 weisen eine zentrische Innenbohrung 10 mit Querachse 28 sowie Abzweigkanäle 11 zur Zuführung von Schutzgas in an sich bekannter Weise auf.

Innerhalb des Ofenkörpers 2 befindet sich konzentrisch zur Längsachse 5 ein rohrförmiger Innenkörper 12, der als Plattform bzw. Probenaufnahme für eine zu analysierende Probe 13 dient. Die Probe 13 wird über eine äußere Eingabeöffnung 14 im Ofenkörper 2 und eine hiermit fluchtende innere Eingabeöffnung 15 auf die Probenaufnahme des Innenkörpers 12 aufgegeben. Das Einfüllen der Probe durch diese Öffnungen geschieht im allgemeinen mit einer Mikropipette.

Der rohrförmige Innenkörper 12 ist gemäß der Darstellung in Figuren 1 und 2 in seinem oberen, stirnseitigen Endbereich 16 über einen einzigen, etwas exzentrisch angeordneten Verbindungssteg 17 mit dem äußeren Ofenkörper 2 verbunden. Der Verbindungssteg 17, der sich als schmales anschließendes Kreisringsegment über einen Winkel α 50° (Fig. 2) erstreckt, ist an dem hinteren Endbereich 16 des Innenkörpers 12 derart angeformt, daß er sich an der "kältesten" Stelle des Ofenkörpers 2 befindet. Wie in Fig. 2 dargestellt, liegt der Verbindungssteg 17 deshalb nicht in der an sich optimalen obersten, zur Probe 13 entferntesten Position, sondern in einer, mit einem Uhrzifferblatt vergleichbaren Stellung zwischen den Ziffern 10 und 11, d. h. der Winkel α liegt zwischen den Winkeln α₁ ≈ 20° und α₂ ≈ 70° gegenüber der horizontalen Querachse 28. In diesem Bereich weist der querbeheizte Ofenkörper seine stärkste Materialansammlung auf (Bereich 29 in Fig. 1), so daß sich hier aufgrund der größeren Masse und der hiermit verbundenen Aufheizverzögerung sowie des niedrigeren Ohm′schen Widerstandes und der hiermit verbundenen geringeren elektrischen Aufheizung die "kälteste" Stelle des Ofenkörpers 2 beim Aufheizvorgang befindet.

Die Position des Verbindungsstegs 17 ist demnach so angeordnet, daß dieser zum einen möglichst weit weg ist von der Probe 13, um eine möglichst geringe, vorzeitige Wärmebeeinflussung der Probe 13 durch Wärmeleitungseffekte zu erhalten. Zum anderen wird der Verbindungssteg 17 an eine solche Stelle des querbeheizten Ofenkörpers 2 gelegt, der sich aufgrund seiner größeren Masseansammlung 29 und seines niedrigeren Ohm′schen Widerstandes verzögert aufheizt, d. h. an die "kälteste" Stelle des Ofenkörpers 2. Der Verbindungssteg 17 ist deshalb etwas exzentrisch versetzt angeordnet. Ggf. kann der Ofenkörper 2 im Bereich des Verbindungsstegs 17 eine entsprechende "Materialauffütterung" aufweisen. Durch vorgenannte Maßnahmen wird eine maximale Verzögerung in der Aufheizkurve der Probe sowie eine optimale Probenbehandlung erzielt. Dabei wird ein Stromdurchfluß durch die Probenaufnahme selbst und damit dessen zusätzliche Aufheizung vermieden.

Aufgrund des geringen Abstandes zwischen Probenaufnahme 12 und Ofenkörper 2 (ungefähr 0,3 mm) wird trotzdem die erwünschte schnelle Aufheizung des Systems durch die Wärmestrahlung gewährleistet.

Der Innenkörper 12 weist gemäß der Darstellung in Fig. 3 in einem bevorzugten Ausführungsbeispiel einen Außendurchmesser d₁ ≈ 5,6 mm und einen Innendurchmesser d₂ ≈ 5 mm auf. Hieraus ergibt sich eine Wandstärke s für den Innenkörper von s ≈ 0,3 mm, d. h. die Probenaufnahme ist sehr dünnwandig ausgebildet. An seinen beiden Stirnseiten 16, 16′ ist der Innenkörper 12 mit einem kleinen Kreisringabsatz oder Rand 18 versehen, der eine Durchgangsöffnung für den Strahlengang 4 von d₃ ≈ 4 mm beläßt. Durch den Rand 18 ist es möglich, daß auch größere Probenmengen 13 aufgenommen werden, ohne daß es zum Überlaufen der Probenaufnahme kommt. Ein Überlaufen der Probe kann zu einer vorzeitigen Verdampfung der Probe und damit zu einem unerwünschten Meßwert als "Vorpeek" führen. Der Innendurchmesser des Ofenkörpers 2 beträgt d₄ ≈ 6,15 mm. Die äußere bzw. innere Eingabeöffnung 14, 15 weist einen Durchmesser d₅ ≈ 1,6 mm auf.

Der Innenkörper 12 ist aus einem Stück mit dem Ofenkörper 2 aus dem Vollen gefertigt. Hierfür wird mittels eines Spezialwerkzeugs zwischen Ofenkörper 2 und Innenkörper 12 der erforderliche Ringspalt 19 hergestellt, unter Beibehaltung des kreissegmentförmigen Verbindungssteges 17. Der Verbindungssteg 17 weist an seinen beiden Segmentenden Übergangsradien 20 zum Ofenkörper 2 hin auf, die eine Größenordnung von 0,75 mm aufweisen.

Bei der Ausführungsform der Erfindung nach Figuren 4 und 5 handelt es sich um einen Graphitrohrofen 1, dessen Ofenkörper 21 in axialer Längsrichtung, d. h. in Richtung seiner Längsachse 22, stromdurchflossen ist. Dies entspricht einer Graphitrohranordnung, wie sie in der DE 25 54 950 C2 gezeigt ist. Hierfür sind die Kontaktfasen 23′, 24′ an den Stirnseiten 23, 24 des Ofenkörpers 21 als Anschlußflächen für einen Stromanschluß ausgebildet, was den Kontaktfasen 8′, 9′ in Fig. 1 entspricht. Der Innenkörper 12′ zur Bildung der Probenaufnahme für die Probe 13 ist in Figuren 4, 5 ebenfalls als rohrförmiger Körper ausgebildet, mit einem Verbindungssteg 17′, der im oberen Endbereich der Stirnseite 16′ einstückig mit dem Innenkörper 12′ verbunden ist. Wie aus Fig. 5 ersichtlich, ist diese Anbindung zur Bildung des Verbindungsstegs 17 hier symmetrisch zur vertikalen Symmetrieachse 27 angeordnet, da bei diesem Ofenkörper 21 keine Massenkonzentration, wie beim Ausführungsbeispiel nach Fig. 1, vorhanden ist, wobei die radienförmigen Übergänge 20 in ihrem oberen Bereich an einem Punkt 25 enden, der in einem Bogenwinkel β = 45° von der vertikalen Symmetrieachse 27 entfernt ist. Hierdurch ergibt sich ein sehr allmählicher Übergang vom Innenkörper 12′ zum Ofenkörper 21, was zur Stabilität des Systems beiträgt. Zwischen Ofenkörper 21 und Innenkörper 12′ ist wiederum ein Ringspalt 19 vorgesehen, der durch ein entsprechendes Einstechwerkzeug hergestellt wird.

Die Abmaße d₁ bis d₄ in Fig. 4 entsprechen denjenigen, wie in Fig. 3 beschrieben. Gleiches gilt für den Durchmesser d₅ der beiden Eingabeöffnungen 14, 15. Prinzipiell entspricht deshalb die Anordnung des Innenkörpers 12′ als Probenaufnahme innerhalb des Offenkörpers 21 in Figuren 4, 5 derjenigen des Innenkörpers 12 im Ofenkörper 2 gemäß Fig. 1. Soweit übereinstimmend sind deshalb gleiche Teile mit gleichen Bezugszeichen gekennzeichnet.

Die Erfindung ist nicht auf das beschriebene und dargestellte Ausführungsbeispiel beschränkt. Sie umfaßt auch vielmehr alle fachmännischen Weiterbildungen und Ausgestaltungen im Rahmen des Erfindungsgedankens.

## Patentansprüche

1. Graphitrohrofen zur elektrothermischen Atomisierung von Proben für die Atomabsorptions-Spektroskopie, mit einem an seinen beiden Enden offenen, rohrförmigen, in Querrichtung oder Längsrichtung stromdurchflossenen Ofenkörper (2, 21), in dessen Inneren ein durch den Ofenkörper (2, 21) aufheizbarer Innenkörper (12, 12′) als Probenaufnahme angeordnet ist, wobei die Verbindung zwischen Ofenkörper (2, 21) zum Innenkörper (12, 12′) über einen Verbindungssteg (17, 17′) erfolgt, und der Innenkörper (12, 12′) als innerhalb des Ofenkörpers (2, 21) konzentrisch angeordnetes, kreiszylindrisches Rohr (12, 12′) ausgebildet ist, dadurch gekennzeichnet, daß das Rohr an einem oberen, stirnseitigen Ende (16, 16′) in dessen oberen Bereich über einen einzigen schmalen Verbindungssteg (17) mit dem Ofenkörper (2, 21) verbunden ist.

2. Graphitrohrofen nach Anspruch 1, dadurch gekennzeichnet, daß der Verbindungssteg (17, 17′) zwischen Innenkörper (12, 12′) und Ofenkörper (2, 21) im oberen Bereich einer Stirnseite des Innenkörpers (12, 12′) als Kreissegmentübergang einstückig angeformt ist.

3. Graphitrohrofen nach Anspruch 1 oder 2, dadurch gekennzeichnet, daß der Verbindungssteg (17, 17′) mit einem Übergangsradius (20) tangential in die Innenwandung (3) des Ofenkörpers (2, 21) übergeht.

4. Graphitrohrofen nach einem oder mehreren der vorhergehenden Ansprüche, dadurch gekennzeichnet, daß der Innenkörper (12) eine Wandstärke s von ca. 0,3 mm aufweist, bei einem Abstand zur Innenwandung (3) des Ofenkörpers (2, 21) von ca. 0,3 mm.

5. Graphitrohrofen nach Anspruch 1, dadurch gekennzeichnet, daß die Probenaufnahme (12, 12′) an ihren beiden Stirnseiten (16, 16′) einen umlaufenden oder wenigstens unteren Rand (18) oder Kreisringabsatz (18) aufweist.

6. Graphitrohrofen nach Anspruch 1, dadurch gekennzeichnet, daß die Probenaufnahme (12, 12′) aus einem Stück mit dem Ofenkörper (2) aus dem Vollen gefertigt ist.

7. Graphitrohrofen nach Anspruch 1, dadurch gekennzeichnet, daß der Verbindungssteg (17) derart dünn ausgebildet ist, daß er eine möglichst geringe Wärmeleitfähigkeit aufweist.

8. Graphitrohrofen nach Anspruch 1, dadurch gekennzeichnet, daß bei einem querbeheizten Ofenkörper (2) der Verbindungssteg (17) zwischen rohrförmiger Probenaufnahme (12) und Ofenkörper (2) derart angeordnet ist, daß er an der "kältesten" Stelle des Ofenkörpers (2) liegt, wobei die "kälteste" Stelle eine größere Materialansammlung des Ofenkörpers (2) und/oder einen niedrigeren Ohm′schen Widerstand aufweist.

9. Graphitrohrofen nach Anspruch 1, dadurch gekennzeichnet, daß bei einem längsbeheizten Ofenkörper (21) der Verbindungssteg (17′) zwischen Innenrohr (12′) und Ofenkörper (21) am oberen, stirnseitigen Ende achssymmetrisch angeordnet ist.

10. Graphitrohrofen nach einem oder mehreren der Ansprüche 1 bis 9, dadurch gekennzeichnet, daß der Ofen (2, 21) im Bereich des Verbindungsstegs (17, 17′) zur Herstellung einer "kälteren" Stelle eine Materialansammlung und einen niedrigeren Ohm′schen Widerstand aufweist.

## Claims

1. Graphite tube furnace for the electrothermal atomization of samples for atom absorption spectroscopy having a tubular furnace body (2, 21) open at both ends and carrying current in a lateral or longitudinal direction, inside which an internal body (12, 12′) heated by the furnace body (2, 21) is arranged as a sample support, wherein a connecting member (17, 17′) connects the furnace body (2, 21) to the internal body (12, 12′) and the internal body (12, 12′) has the form of a concentrically arranged circular cylindrical tube (12, 12′) inside the furnace body (2, 21), characterized in that the tube is connected to the furnace body (2, 21) at an upper surface side end (16, 16′) in its upper part by a single narrow connecting member (17).

2. Graphite tube furnace according to claim 1, characterized in that the connecting member (17, 17′) between the internal body (12, 12′) and the furnace body (2, 21) in the upper area of a surface side of the internal body (12, 12′) is attached in one piece as a circular segment link.

3. Graphite tube furnace according to claim 1 or 2 characterized in that the connecting member (17, 17′) is tangentially linked to a transition radius (20) in the inside wall (3) of the furnace body (2, 21).

4. Graphite tube furnace according to one or several of the preceding claims, characterized in that internal body (12) has a wall strength s of circa 0.3 mm at a distance from the inside wall (3) of the furnace body (2, 21) of circa 0.3 mm.

5. Graphite tube furnace according to claim 1, characterized in that the sample support (12, 12′) has a peripheral or at least a lower edge (18) or circular ring shoulder (18) on both of its surface sides (16, 16′).

6. Graphite tube furnace according to claim 1, characterized in that the sample support (12, 12′) is made from the whole in one piece with the furnace body (2).

7. Graphite tube furnace according to claim 1, characterized in that the connecting member (17) is so narrow that it has the lowest possible thermal conductivity.

8. Graphite tube furnace according to claim 1, characterized in that in a laterally heated furnace body (2) the connecting member (17) is arranged between the tubular sample support (12) and furnace body (2) such that it lies at the "coolest" point of the furnace body (2), wherein the "coolest" point has a larger collection of material from the furnace body (2) and/or a lower Ohm resistance.

9. Graphite tube furnace according to claim 1, characterized in that in a longitudinally heated furnace body (21) the connecting member (17′) is arranged axially symmetrically on the upper surface side end between the inner tube (12′) and furnace body (21).

10. Graphite tube furnace according to one or several of claims 1 to 9, characterized in that the furnace (2, 21) has a material accumulation and a lower Ohm resistance in the area of the connecting member (17, 17′) for producing a "cooler" point.

## Revendications

1. Four à tube de graphite pour l'atomisation électrothermique d'échantillons pour la spectroscopie par absorption atomique, comportant un corps de four (2,21) ouvert à ses deux extrémités, tubulaire, traversé par le courant en direction transversale ou en direction longitudinale, à l'intérieur duquel est agencé un corps interne (12,12′) pouvant être chauffé par le corps de four (2,21), comme récepteur d'échantillons, la liaison entre le corps de four (2,21) et le corps interne (12,12′) étant effectuée par l'intermédiaire d'une entretoise (17,17′), et le corps interne (12,12′) étant réalisé comme tube (12,12′) cylindrique circulaire, agencé de façon concentrique à l'intérieur du corps de four (2,21),
caractérisé en ce que le tube, à une extrémité supérieure frontale (16,16′), dans sa zone supérieure, est relié, par l'intermédiaire d'une seule entretoise étroite (17), au corps de four (2,21).

2. Four à tube de graphite selon la revendication 1, caractérisé en ce que l'entretoise (17,17′) entre le corps interne (12,12′) et le corps de four (2,21) est formée en une seule pièce dans la zone supérieure d'une face frontale du corps interne (12,12′), comme transition en segment de cercle.

3. Four à tube de graphite selon la revendication 1 ou 2, caractérisé en que l'entretoise (17,17′) se convertit, avec un rayon de transition (20), tangentiellement en la paroi interne (3) du corps de four (2,21).

4. Four à tube de graphite selon une ou plusieurs des revendications précédentes,
caractérisé en ce que le corps interne (12) présente une épaisseur de paroi s d'environ 0,3 mm, pour un écartement par rapport à la paroi interne (3) du corps de four (2,21) d'environ 0,3 mm.

5. Four à tube de graphite selon la revendication 1, caractérisé en ce que le récepteur d'échantillons (12,12′), à ses deux faces frontales (16,16′), présente un bord périphérique ou au moins inférieur (18) ou un décrochement annulaire circulaire (18).

6. Four à tube de graphite selon la revendication 1, caractérisé en ce que le récepteur d'échantillons (12,12′) est constitué entièrement en une pièce avec le corps de four (2).

7. Four à tube de graphite selon la revendication 1, caractérisé en ce que l'entretoise (17) est réalisée en ayant une minceur telle qu'elle présente une conductibilité thermique la plus faible possible.

8. Four à tube de graphite selon la revendication 1, caractérisé en ce que, pour un corps de four (2) chauffé transversalement, l'entretoise (17) entre le récepteur tubulaire d'échantillons (12) et le corps de four (2) est agencée de sorte qu'elle se trouve à l'endroit "le plus froid" du corps de four (2), l'endroit "le plus froid" présentant une accumulation de matière plus grande du corps de four (2) et/ou une résistance ohmique plus faible.

9. Four à tube de graphite selon la revendication 1, caractérisé en ce que, pour un corps de four (21) chauffé longitudinalement, l'entretoise (17′) entre le tube interne (12′) et le corps de four (21) est agencée, de façon axialement symétrique, à l'extrémité supérieure frontale.

10. Four à tube de graphite selon une ou plusieurs des revendications 1 à 9,
caractérisé en ce que que le four (2,21), dans la zone de l'entretoise (17,17′), présente une accumulation de matière et une résistance ohmique plus faible pour obtenir un endroit "plus froid".
